# FASCICULE DE BREVET EUROPEEN

(11) **EP 0 751 465 B1**
(45) Date de publication et mention de la délivrance du brevet: **03.07.2002**
(21) Numéro de dépôt: 96401432.8
(22) Date de dépôt: 27.06.1996
(51) Int. Cl.: G06F 15/16, G06F 13/12

(54) **Dispositif d'échange de messages entre deux machines informatiques et procédé d'exécution de commandes utilisant ce dispositif**
Anordnung zum Nachrichtenaustausch zwischen zwei Rechnern und Verfahren zur Befehlsausführung unter Verwendung der Anordnung
Apparatus for the exchange of messages between two computers and method of command execution using the apparatus

(30) Priorité: 30.06.1995 FR 9507936
(43) Date de publication de la demande: 02.01.1997
(73) Titulaire: BULL S.A., 78430 Louveciennes (FR)
(72) Inventeur: Boudou, Alain, 78930 Vert (FR); Halila, Majed, 69007 Lyon (FR); d'Hoe, Michel, 78290 Croissy sur Seine (FR)

(56) Documents cités:
- EP-A- 0 380 856
- EP-A- 0 557 025
- IBM TECHNICAL DISCLOSURE BULLETIN, vol. 28, no. 12, Mai 1986, ARMONK, NY, US, pages 5364-5365, XP002014317 "DATA BUFFER MECHANISM"

## Description

L'invention se situe dans le domaine des systèmes informatiques où un système est constitué de plusieurs machines qui, pour échanger des données, communiquent entre elles par des liaisons série.

Une première machine A échange des données avec une deuxième machine B en envoyant une requête à la machine B. A la suite d'une requête en lecture émise par la machine A vers la machine B, la machine B émet vers la machine A une réponse contenant les données demandées par la machine A. A la suite d'une requête en écriture émise par la machine A vers la machine B, la machine B émet vers la machine A une réponse contenant l'état de prise en compte de la requête, tel que par exemple un acquittement. La deuxième machine B échange des données avec la première machine A de façon symétrique.

Les requêtes et les réponses constituent des messages qui circulent entre les deux machines au moyen d'une liaison de transmission série bidirectionnelle. C'est à dire que les messages sont successivement émis sous forme d'une suite de signaux véhiculées par la liaison de transmission série bidirectionnelle. Différents moyens de réalisation de liaison de transmission série bidirectionnelle sont connus. On peut citer, à titre non limitatif, la mise en oeuvre d'une ou plusieurs lignes électriques reliant les deux machines, ou la mise en oeuvre de fibres optiques. Par exemple, le brevet US-A-5347538, déposée au nom de la demanderesse, décrit une liaison série bidirectionnelle utilisant une ligne électrique.

Selon l'état de la technique, dans chaque machine, les messages à émettre sont stockés suivant leur ordre d'apparition dans une mémoire tampon de départ, de type premier entré premier sorti, en attente de pouvoir être émis sur la liaison de transmission série bidirectionnelle. De même, dans chaque machine, les messages reçus de la ligne de transmission sont stockés suivant leur ordre de réception dans une mémoire tampon d'arrivée, de type premier entré premier sorti, en attente de pouvoir être traités par la machine réceptrice.

EP-A-0 557 025 (INTERNATIONAL BUSINESS MACHINES CORPORATION) divulgue un dispositif incluant une première machine comprenant une mémoire tampon de départ pour stocker la requête à envoyer vers une deuxième machine, une mémoire tampon d'arrivée pour stocker la réponse envoyée par la deuxième machine et une mémoire tampon de départ pour stocker des données à envoyer vers la deuxième machine. La deuxième machine comprend la même structure, la requête allant dans une mémoire tampon d'arrivée qui lui est destinée et les données allant dans une mémoire tampon d'arrivée qui lui est également destinée. La réponse produite par la deuxième machine en fonction de la requête et des données est stockée dans une mémoire tampon de départ prévue pour stocker les réponses à envoyer à la première machine. La réponse est envoyée une fois que toutes les données sont parvenues à la deuxième machine. EP-A-0 557 025 décrit en outre une liaison bidirectionelle, la deuxième machine pouvant elle-aussi émettre des requêtes à la première machine et en recevoir des réponses.

L'émission d'un message sur la liaison de transmission série bidirectionnelle, nécessite une place suffisante dans la mémoire tampon d'arrivée de la machine réceptrice pour pouvoir accepter ce message. La mémoire tampon d'arrivée de la machine réceptrice se vide au fur et à mesure du traitement des messages par cette machine. Si le message est une requête, son traitement produit une réponse qui est stockée dans la mémoire tampon de départ de la machine ayant reçu cette requête.

Un remplissage intégral des mémoires tampon dans les deux machines peut bloquer toute émission de messages. Par exemple, dans le cas où les mémoires tampon de départ et d'arrivée sont pleines dans chacune de deux machines communiquant entre elles, si le premier message présenté dans chacune des mémoires tampon d'arrivée est une requête, il ne peut être traité tant qu'une place suffisante pour recevoir la réponse n'est pas libérée dans la mémoire tampon de départ. Or, la libération de place dans la mémoire tampon de départ ne peut se faire tant qu'une place suffisante pour recevoir le premier message de la mémoire tampon de départ n'est pas libérée dans la mémoire tampon d'arrivée de l'autre machine. Les mémoires tampon d'arrivée et de départ se bloquent mutuellement leur libération.

On pourrait imaginer de dimensionner les mémoires tampon de départ et d'arrivée à une taille suffisante pour qu'elles ne soient pas encombrées par l'abondance de messages générés par les machines. Cependant, la capacité de communication du système serait limitée par la taille des mémoires tampon. A taille de mémoire tampon donnée, il serait difficile d'accroître le rythme des échanges au delà de celui prévu.

On pourrait encore imaginer de doter chaque machine d'une pile succédant à la mémoire tampon d'arrivée. Les requêtes présentées en sortie de la mémoire tampon d'arrivée seraient stockées dans cette pile, en attente de place disponible dans la mémoire tampon de départ pour recevoir les réponses à ces requêtes. Ceci présenterait l'avantage de libérer la mémoire tampon d'arrivée. Cependant, le problème d'encombrement ne serait que repoussé et se représenterait lors du remplissage intégral de cette pile. Pour des systèmes performants, il serait nécessaire de prévoir des mémoires tampon ou une pile à contenance élevée. Malgré les fortes capacités d'intégration actuelles dans les circuits électriques, il est préférable de réserver le minimum de place aux fonctions de communication et d'attribuer cette place à d'autres fonctions.

L'objet de l'invention est de mettre en oeuvre des mémoires tampon de taille réduite sans que ne puisse se poser le problème d'encombrement précédemment décrit de ces mémoires tampon.

L'invention telle que définie dans la revendication 1 propose un dispositif d'échange de messages entre deux machines informatiques au moyen d'une liaison série bidirectionnelle, caractérisé en ce qu'il comprend pour chaque machine,
- une première mémoire tampon de départ pour contenir uniquement des messages de type requête à émettre sur la liaison série bidirectionnelle,
- une deuxième mémoire tampon de départ pour contenir uniquement des messages de type réponse à émettre sur la liaison série bidirectionnelle,
- une première mémoire tampon d'arrivée pour contenir uniquement des messages de type requête reçus de la liaison série bidirectionnelle,
- une deuxième mémoire tampon d'arrivée pour contenir uniquement des messages de type réponse reçus de la liaison série bidirectionnelle,
- un premier organe d'aiguillage autorisant le transfert d'un message de la première mémoire tampon de départ, respectivement de la deuxième mémoire tampon de départ, vers la liaison série bidirectionnelle si une première mémoire tampon d'arrivée, respectivement une deuxième mémoire tampon d'arrivée de l'autre machine dispose d'une place suffisante pour recevoir ledit message,
- un deuxième organe d'aiguillage transférant les messages de type requête, respectivement de type réponse, reçus de la liaison série bidirectionnelle, vers la première, respectivement la deuxième mémoire tampon d'arrivée.

Le dispositif selon l'invention procure le résultat suivant. La libération de la deuxième mémoire tampon d'arrivée n'est jamais bloquée par un message de type requête en attente de traitement car il ne contient que des messages de type réponse. Ainsi, la libération de la deuxième mémoire tampon de départ d'une première machine se fait, via la liaison série bidirectionnelle, au gré de la libération de la deuxième mémoire tampon d'arrivée de la deuxième machine. Dans la première machine, la libération de la deuxième mémoire tampon de départ permet à son tour le traitement des requêtes contenues dans la première mémoire tampon d'arrivée. La libération de la première mémoire tampon d'arrivée, ainsi obtenue dans la première machine, permet la libération de la première mémoire tampon de départ de la deuxième machine via la liaison série bidirectionnelle. La taille des mémoires tampon peut se réduire à celle suffisante pour stoker quelques messages, voire même un seul.

Le premier organe d'aiguillage peut prendre connaissance de la place disponible dans les mémoires tampon d'arrivée de l'autre machine de différentes manières. Par exemple la réception d'une réponse dans une machine indique une libération de la requête à l'origine de cette réponse dans l'autre machine. Cependant le traitement de telles considérations demanderait un certain temps qui pourrait compliquer et ralentir les échanges de messages.

C'est pourquoi l'invention propose d'adjoindre au dispositif d'échange de messages, un registre dans lequel le deuxième organe d'aiguillage accumule des jetons d'un premier type reçus sous forme de messages de l'autre machine par la liaison série bidirectionnelle et duquel le premier organe d'aiguillage retire, à chaque transfert d'un message de la première mémoire tampon de départ vers la liaison série bidirectionnelle, une quantité de ces mêmes jetons représentative de la longueur de ce message, un registre dans lequel le deuxième organe d'aiguillage accumule des jetons d'un deuxième type reçus sous forme de messages de l'autre machine par la liaison série bidirectionnelle et duquel le premier organe d'aiguillage retire, à chaque transfert d'un message de la deuxième mémoire tampon de départ vers la liaison série bidirectionnelle, une quantité de ces mêmes jetons représentative de la longueur de ce message, une dernière mémoire tampon dans laquelle sont accumulés, sous forme de messages, une quantité de jetons du premier type représentative de la place rendue disponible par le retrait de messages de la première mémoire tampon d'arrivée et une quantité de jetons du deuxième type représentative de la place rendue disponible par le retrait de messages de la deuxième mémoire tampon d'arrivée, les messages accumulés dans la dernière mémoire tampon étant transférés vers la liaison série bidirectionnelle par l'organe d'aiguillage.

Ainsi, les transferts de jetons entre les deux machines s'intercalent entre les autres transferts de messages suivant la disponibilité de la liaison série et donnent des informations exactes sur la libération de chacune des mémoires d'arrivée avec un minimum d'encombrement et donc dans un minimum de temps. Un message d'un type jeton peut se réduire à son entête indiquant simplement son type. Ceci permet alors au deuxième organe d'aiguillage de distinguer facilement les jetons des autres messages et de les diriger vers le registre adéquat.

Chaque type de jeton représente un nombre fixe d'octets disponibles dans la mémoire tampon associée à ce type de jeton. Chaque type de jeton représente encore un nombre fixe d'octets à l'intérieur de chaque message. Cependant, si on fixe ce nombre trop grand, un message court risquera de se réserver un nombre d'octets surabondant dans les mémoires tampon. Si on fixe un nombre d'octets trop petit, de nombreux jetons seront nécessaires pour les messages longs, ce qui risque d'encombrer la liaison série bidirectionnelle.

Il est intéressant de perfectionner le dispositif de l'invention en rendant programmable une correspondance entre chaque type de jetons et un nombre d'octets à l'intérieur d'un message avant mise en marche du dispositif

L'invention telle que définie dans la revendication 3 propose aussi un procédé d'exécution d'au moins une commande générée par une première machine informatique, respectivement par une autre machine informatique, dans une mémoire de l'autre machine, respectivement de la première machine utilisant le dispositif décrit.

Un tel procédé consiste à,
- transformer cette commande en un message de type requête,
- ranger cette requête dans une première mémoire tampon de départ de la première machine, respectivement de l'autre machine,
- transférer cette requête, au moyen d'une liaison série bidirectionnelle, dans une première mémoire tampon d'arrivée de l'autre machine, respectivement de la première machine,
- retirer cette requête de la mémoire tampon pour la transformer en un message de type réponse en exécutant ladite commande dans la mémoire de l'autre machine, respectivement de la première machine,
- ranger cette réponse dans une deuxième mémoire tampon de départ de l'autre machine, respectivement de la première machine,
- transférer cette réponse, au moyen de la liaison série bidirectionnelle, dans une deuxième mémoire tampon d'arrivée de la première machine, respectivement de l'autre machine,
- retirer cette réponse de la deuxième mémoire tampon d'arrivée de la première machine, respectivement de l'autre machine, pour acquitter ladite commande.

Un exemple de mise en oeuvre de l'invention est expliqué dans la suite de la description en référence aux figures.
- La figure 1 représente un système informatique propre à utiliser l'invention.
- La figure 2 représente un dispositif conforme à l'invention.

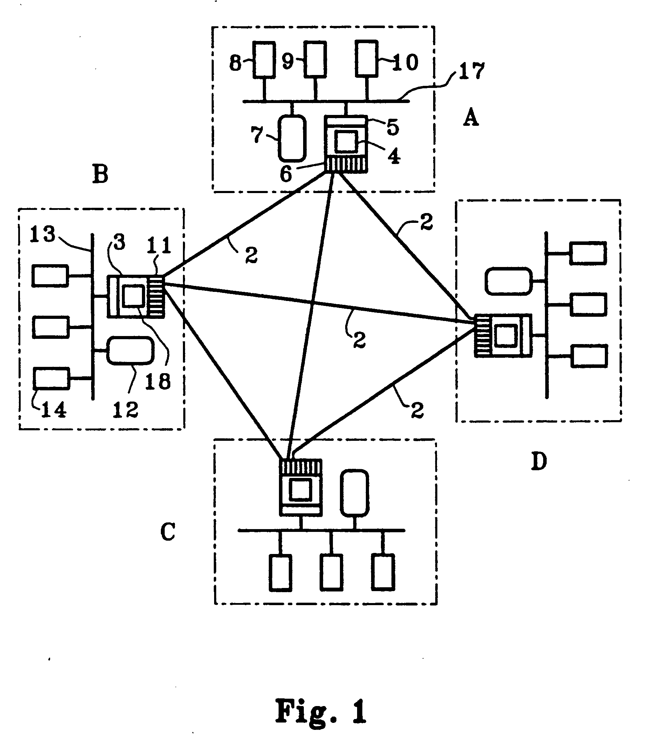

Le système informatique de la figure 1 comprend plusieurs machines A,B,···,C,D qui échangent entre elles des messages au moyen de liaisons série bidirectionnelles 2 reliant les machines deux à deux. Une machine A comprend, essentiellement au moins un processeur 8, une mémoire 7 et un module d'entée sortie 5 pour échanger des messages avec d'autres machines B,···,C,D de constitutions similaires. La machine A peut comprendre un ou plusieurs autres processeurs 9, 10. Un bus 17 véhicule des commandes, des adresses et des données entre le ou les processeur 8,9,10, la mémoire 7 et le module d'entrée sortie 5. Le module d'entrée sortie 5 comprend plusieurs coupleurs 6 émetteur-récepteur. A chaque liaison série bidirectionnelle 2 pour échanger des messages avec l'une des autres machines B,···,C,D est affecté un coupleur 6 du module d'entrée sortie 5. Le module d'entrée sortie 5 comprend aussi un organe 4 de transformation des commandes et des données du bus 17 en messages et vice versa.

A titre d'exemple, la suite de la description explique un échange de messages entre deux machines A et B. On retrouve dans la machine B, un module d'entrée sortie 3 et une mémoire 12 entre lesquelles un bus 13 véhicule des commandes, des adresses et des données. Un coupleur 11 du module d'entrée sortie 3 est affecté à la liaison série bidirectionnelle 2 pour échanger des messages avec la machine A.

Dans l'exécution d'un processus, par exemple le processeur 8 de la machine A, lit et écrit des données dans la mémoire 7 de la machine A ou dans la mémoire d'une autre machine B,···,C ou D. Pour lire, respectivement écrire, une donnée dans la mémoire 12 de la machine B, le processeur 8 envoie une commande de lecture, respectivement d'écriture, vers le module d'entrée sortie 5, au moyen du bus 17. L'organe 4 transforme cette commande de lecture, respectivement d'écriture, en un message de type requête qu'il dirige vers le coupleur 6 affecté à la liaison série bidirectionnelle 2 pour échanger des messages entre la machine A et la machine B. La liaison série bidirectionnelle 2 transmet la requête au coupleur 11 du module d'entrée sortie 3. La requête déclenche dans le module d'entrée sortie 3 une lecture, respectivement une écriture, dans la mémoire 12 au moyen du bus 13. Le module d'entrée sortie 3 élabore alors un message de type réponse qu'il dirige vers le coupleur 11. La réponse contient la donnée à lire dans la mémoire 12, respectivement un acquittement d'écriture effectuée dans la mémoire 12. La liaison série bidirectionnelle 2 transmet la réponse au coupleur 11 du module d'entrée sortie 5. Si la commande envoyée par le processeur 8 était une commande de lecture, le module d'entrée sortie 5 transmet au processeur 8 la donnée contenue dans la réponse. Si la commande envoyée par le processeur 8 était une commande d'écriture, le module d'entrée sortie 5 traite l'acquittement contenu dans la réponse.

Le fonctionnement précédemment décrit s'effectue de façon symétrique dans l'exécution d'un processus par un processeur 14 de la machine B nécessitant un accès à la mémoire 7 de la machine A.

De la sorte, chacune des machines A,B,···,C,D accède à la mémoire d'une autre machine comme si cette mémoire était directement raccordée à son bus interne.

Pour chaque paire de machines A,B échangeant des messages, un coupleur 6 de la machine A, un coupleur 11 de la machine B et la liaison série bidirectionnelle reliant ces deux coupleurs constituent un dispositif d'échange de messages entre deux machines informatiques.

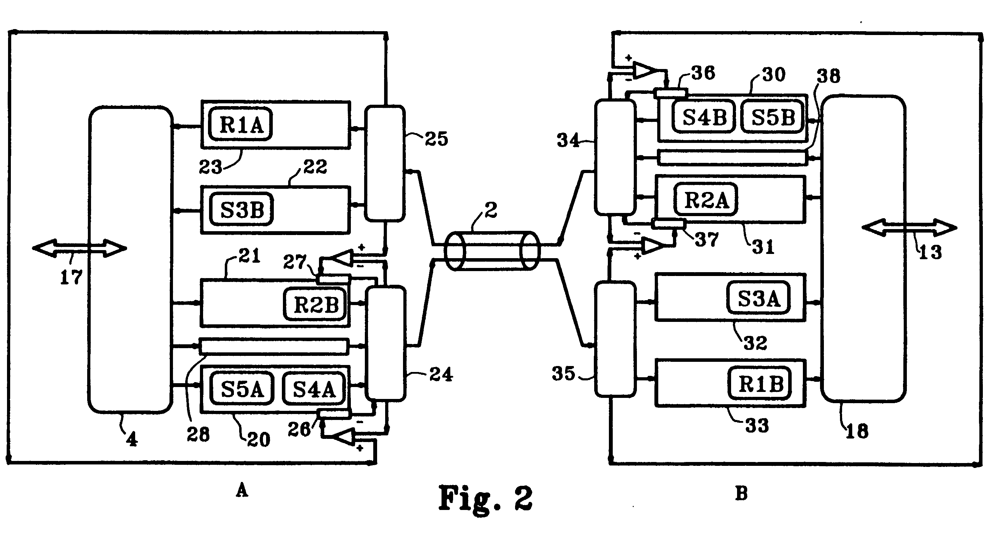

Un tel dispositif est décrit plus en détail à l'aide de la figure 2.

Dans le coupleur 6 de la machine A, on distingue les éléments qui suivent. Une mémoire tampon 20 dite de départ est prévue pour recevoir les messages de type requête élaborés par l'organe 4 dans le module d'entrée sortie 5 à partir d'une commande de lecture ou d'écriture envoyée par un processeur de la machine A au module d'entrée sortie 5. Les requêtes y sont accumulées en attente de pouvoir être émises sur la liaison série bidirectionnelle 2. Une mémoire tampon 21 dite de départ est prévue pour recevoir les messages de type réponse qui résultent d'une lecture ou d'une écriture dans la mémoire de la machine A, suite à une requête reçue par le module d'entrée sortie 5. Chaque réponse y est stockée en attente de pouvoir être émises sur la liaison série bidirectionnelle 2. Une mémoire tampon 22 dite d'arrivée est prévue pour recevoir les messages de type requête reçus de la liaison série bidirectionnelle 2. Les requêtes y sont accumulées en attenté de pouvoir être traitées par l'organe 4. Une mémoire tampon 23 dite d'arrivée est prévue pour recevoir les messages de type réponse reçus de la liaison série bidirectionnelle 2. Les réponses y sont accumulées en attente de traitement par l'organe 4. Le traitement par l'organe 4 d'une réponse est fonction de son contenu. Elle consiste à transférer les données qu'elle contient au processeur à l'origine d'une requête en lecture à laquelle elle répond. Elle consiste, par exemple à mettre à jour un registre d'état lorsqu'elle répond à une requête en écriture.

De même, dans le coupleur 11 de la machine B, on distingue les éléments qui suivent. Une mémoire tampon 30 dite de départ est prévue pour recevoir les messages de type requête élaborés par un organe 18 dans le module d'entrée sortie 3 à partir d'une commande de lecture ou d'écriture envoyée par un processeur de la machine B au module d'entrée sortie 3. Les requêtes y sont accumulées en attente de pouvoir être émises sur la liaison série bidirectionnelle 2. Une mémoire tampon 31 dite de départ est prévue pour recevoir les messages de type réponse qui résultent d'une lecture ou d'une écriture dans la mémoire de la machine B, suite à une requête reçue par le module d'entrée sortie 3. Chaque réponse y est stockée en attente de pouvoir être émises sur la liaison série bidirectionnelle 2. Une mémoire tampon 32 dite d'arrivée est prévue pour recevoir les messages de type requête reçus de la liaison série bidirectionnelle 2. Les requêtes y sont accumulées en attente de pouvoir être traitées par l'organe 18. Une mémoire tampon 33 dite d'arrivée est prévue pour recevoir les messages de type réponse reçus de la liaison série bidirectionnelle 2. Les réponses y sont accumulées en attente de traitement par l'organe 18. Le traitement par l'organe 18 d'une réponse est fonction de son contenu. Elle consiste à transférer les données qu'elle contient au processeur à l'origine d'une requête en lecture à laquelle elle répond. Elle consiste, par exemple à mettre à jour un registre d'état lorsqu'elle répond à une requête en écriture.

La liaison série bidirectionnelle 2 possède à chacune de ses extrémités un couple émetteur récepteur dont l'un est affecté à la machine A et l'autre est affecté à la machine B.

Dans le coupleur 6, un organe d'aiguillage 24 autorise le transfert d'un message de la mémoire tampon 20, respectivement de la mémoire tampon 21, vers la liaison série bidirectionnelle 2 si la mémoire tampon 32, respectivement la mémoire tampon 33, dispose d'une place suffisante pour recevoir ledit message. L'organe d'aiguillage 24 possède une sortie de messages connectée à l'entrée de l'émetteur de la liaison série bidirectionnelle 2 affecté à la machine A. Un organe d'aiguillage 25 possède une entrée de messages connectée au récepteur de la liaison bidirectionnelle 2 affecté à la machine A. L'organe d'aiguillage 25 transfère les messages de type requête reçus de la liaison série bidirectionnelle 2, vers la mémoire tampon 22 et les messages de type réponse reçus de la liaison série bidirectionnelle 2, vers la mémoire tampon 23.

De même, dans le coupleur 11, un organe d'aiguillage 34 autorise le transfert d'un message de la mémoire tampon 30, respectivement de la mémoire tampon 31, vers la liaison série bidirectionnelle 2 si la mémoire tampon 22, respectivement la mémoire tampon 23, dispose d'une place suffisante pour recevoir ledit message. L'organe d'aiguillage 34 possède une sortie de messages connectée à l'entrée de l'émetteur de la liaison série bidirectionnelle 2 affecté à la machine B. Un organe d'aiguillage 35 possède une entrée de messages connectée au récepteur de la liaison bidirectionnelle 2 affecté à la machine B. L'organe d'aiguillage 35 transfère les messages de type requête reçus de la liaison série bidirectionnelle 2, vers la mémoire tampon 32 et les messages de type réponse reçus de la liaison série bidirectionnelle 2, vers la mémoire tampon 33.

Dans le coupleur 6, un registre 26 est affecté à la mémoire tampon 20. La valeur contenue dans le registre 26, exprimée en jetons, représente la place disponible dans la mémoire tampon 32. Un registre 27, affecté à la mémoire tampon 21, contient une valeur, exprimée en jetons, représentative de la place disponible dans la mémoire 33. Une mémoire tampon 28 contient des jetons générés par l'organe 4. La mémoire tampon 28 est de type premier entré premier sorti. Ces jetons sont représentatifs de la place libérée dans les mémoires tampon 22 et 23 par l'organe 4. A chacune des mémoires tampon 22 et 23 est associé un type de jeton différent. L'organe d'aiguillage 24 autorise en priorité le transfert des jetons, sous forme de messages, vers la liaison série bidirectionnelle 2. La sortie de chacune des mémoires tampon 20, 21 et 28 est connectée à une entrée de messages dans l'organe d'aiguillage 24.

De même, dans le coupleur 11, un registre 36 est affecté à la mémoire tampon 30. La valeur contenue dans le registre 36, exprimée en jetons, représente la place disponible dans la mémoire tampon 22. Un registre 37, affecté à la mémoire tampon 31, contient une valeur, exprimée en jetons, représentative de la place disponible dans la mémoire 23. Une mémoire tampon 38 contient des jetons générés par l'organe 18. La mémoire tampon 38 est de type premier entré premier sorti. Ces jetons sont représentatifs de la place libérée dans les mémoires tampon 32 et 33 par l'organe 18. L'organe d'aiguillage 34 autorise en priorité le transfert des jetons, sous forme de messages, vers la liaison série bidirectionnelle 2. La sortie de chacune des mémoires tampon 30, 31 et 38 est connectée à une entrée de messages dans l'organe d'aiguillage 34.

Le dispositif décrit fonctionne de la façon qui suit. Initialement, les registres 26 et 27 contiennent un nombre de jetons représentatifs de la capacité maximale de stockage des mémoires tampons 32 et 33. De même, les registres 36 et 37 contiennent un nombre de jetons représentatifs de la capacité maximale de stockage des mémoires tampons 22 et 23. Chaque message échangé entre deux machines A et B contient une entête identifiant son type: requête, réponse, jeton de requête ou jeton de réponse. Si les messages de type requête ou réponse sont de longueur variable, cette entête indique aussi le nombre de jetons représentant la place nécessaire à contenir le message.

L'organe 4 accumule des requêtes S4A, S5A sous forme de messages dans la mémoire tampon 20 suivant leur ordre d'apparition.

Si le registre, 26 contient un nombre de jetons supérieur ou égal à celui représentant la place nécessaire à contenir le message de requête S4A, l'organe d'aiguillage 24 retire le message S4A de la mémoire tampon 20 et le transfère vers la liaison série 2. Il retranche simultanément du registre 26 le nombre de jetons représentant la place nécessaire à contenir le message S4A. La liaison série 2 transfère alors le message S4A vers l'organe d'aiguillage 35. L'organe d'aiguillage 35 identifie l'entête du message reçu comme étant celle d'une requête. Il range alors le message S4A dans la mémoire 32. Lorsque la mémoire tampon 31 contient une place suffisante pour recevoir une réponse R3A à une requête S3A, l'organe 18 retire le message S3A de la mémoire tampon 32 et range la réponse R3A dans la mémoire tampon 31. La réponse R3A n'est pas représentée sur la figure 2 car celle-ci représente le dispositif décrit à un instant de fonctionnement donné, or une requête et une réponse à cette requête ne sont jamais présentes simultanément. L'organe 18 range simultanément dans la mémoire tampon 38 un nombre de jetons de requête représentant la place nécessaire à contenir la requête S3A, cette place est libérée dans la mémoire tampon 32 par le retrait de la requête S3A.

Si le registre 27 contient un nombre de jetons supérieur ou égal à celui représentant la place nécessaire à contenir le message de réponse R2B, l'organe d'aiguillage 24 retire le message R2B de la mémoire tampon 21 et le transfère vers la liaison série 2. Il retranche simultanément du registre 27 le nombre de jetons représentant la place nécessaire à contenir le message R2B. La liaison série 2 transfère alors le message R2B vers l'organe d'aiguillage 35. L'organe d'aiguillage 35 identifié l'entête du message reçu comme étant celle d'une réponse. Il range alors le message R2B dans la mémoire 33. Lorsque l'organe 18 retire une réponse R1B de la mémoire tampon 33 pour éventuellement en transférer le contenu sur le bus 13, l'organe 18 range simultanément dans la mémoire tampon 38 un nombre de jetons de réponse représentant la place nécessaire à contenir la réponse R1B, cette place est libérée dans la mémoire tampon 33 par le retrait de la réponse R1B.

Tant qu'il existe des jetons de réponse ou des jetons de requête dans la mémoire tampon 38, l'organe d'aiguillage 34 dirige ces jetons sous forme de messages vers la liaison série 2. La liaison série 2 transfère alors ces messages vers l'organe d'aiguillage 25. Si l'organe d'aiguillage 25 identifie l'entête d'un message reçu comme étant celui d'un jeton de réponse, il ajouté ce jeton au registre 27. Si l'organe d'aiguillage 25 identifie l'entête d'un message reçu comme étant celui d'un jeton de requête, il ajoute ce jeton au registre 26.

L'organe 18 accumule des requêtes S4B, S5B sous forme de messages dans la mémoire tampon 30 suivant leur ordre d'apparition.

Si le registre 36 contient un nombre de jetons supérieur ou égal à celui représentant la place nécessaire à contenir le message de requête S4B, l'organe d'aiguillage 34 retire le message S4B de la mémoire tampon 30 et le transfère vers la liaison série 2. Il retranche simultanément du registre 36 le nombre de jetons représentant la place nécessaire à contenir le message S4B. La liaison série 2 transfère alors le message S4B vers l'organe d'aiguillage 25. L'organe d'aiguillage 25 identifie l'entête du message reçu comme étant celle d'une requête. Il range alors le message S4B dans la mémoire 22. Lorsque la mémoire tampon 21 contient une place suffisante pour recevoir une réponse R3B à une requête S3B, l'organe 4 retire le message S3B de la mémoire tampon 22 et range la réponse R3B dans la mémoire tampon 21. La réponse R3B n'est pas représentée sur la figure 2 car celle-ci représente le dispositif décrit à un instant de fonctionnement donné, or une requête et une réponse à cette requête ne sont jamais présentes simultanément. L'organe 4 range simultanément dans la mémoire tampon 28 un nombre de jetons de requête représentant la place nécessaire à contenir la requête S3B, cette place est libérée dans la mémoire tampon 22 par le retrait de la requête S3B.

Si le registre 37 contient un nombre de jetons supérieur ou égal à celui représentant la place nécessaire à contenir le message de réponse R2A, l'organe d'aiguillage 34 retire le message R2A de la mémoire tampon 31 et le transfère vers la liaison série 2. Il retranche simultanément du registre 37 le nombre de jetons représentant la place nécessaire à contenir le message R2A. La liaison série 2 transfère alors le message R2A vers l'organe d'aiguillage 25. L'organe d'aiguillage 25 identifie l'entête du message reçu comme étant celle d'une réponse. Il range alors le message R2A dans la mémoire 23. Lorsque l'organe 4 retire une réponse R1A de la mémoire tampon 23 pour éventuellement en transférer le contenu sur le bus 17, l'organe 4 range simultanément dans la mémoire tampon 28 un nombre de jetons de réponse représentant la place nécessaire à contenir la réponse R1A, cette place est libérée dans la mémoire tampon 23 par le retrait de la réponse R1A.

Tant qu'il existe des jetons de réponse ou des jetons de requête dans la mémoire tampon 28, l'organe d'aiguillage 24 dirige ces jetons sous forme de messages vers la liaison série 2. La liaison série 2 transfère alors ces messages vers l'organe d'aiguillage 35. Si l'organe d'aiguillage 35 identifie l'entête d'un message reçu comme étant celui d'un jeton de réponse, il ajoute ce jeton au registre 37. Si l'organe d'aiguillage 35 identifie l'entête d'un message reçu comme étant celui d'un jeton de requête, il ajoute ce jeton au registre 36.

Il est avantageux de réduire la taille des mémoires tampon 21, 23, 31 et 33 à celle nécessaire à contenir une seule réponse. Le registre 27 peut alors se réduire à un registre binaire mis à 1 par l'organe d'aiguillage 25 à réception d'un jeton de réponse et à zéro par l'organe d'aiguillage 24 à l'émission d'un message de réponse. Le registre 37 peut alors se réduire à un registre binaire mis à 1 par l'organe d'aiguillage 35 à réception d'un jeton de réponse et à zéro par l'organe d'aiguillage 34 à l'émission d'un message de réponse.

## Revendications

1. Dispositif d'échange de messages entre deux machines informatiques au moyen d'une liaison série bidirectionnelle (2), comprenant pour chaque machine,
- une première mémoire tampon de départ (20, 30) pour contenir uniquement des messages de type requête à émettre sur la liaison série bidirectionnelle (2),
- une deuxième mémoire tampon de départ (21, 31) pour contenir uniquement des messages de type réponse à émettre sur la liaison série bidirectionnelle (2),
- une première mémoire tampon d'arrivée (22, 32) pour contenir uniquement des messages de type requête reçus de la liaison série bidirectionnelle (2),
- une deuxième mémoire tampon d'arrivée (23, 33) pour contenir uniquement des messages de type réponse reçus de la liaison série bidirectionnelle (2),
- un premier organe d'aiguillage (24, 34) autorisant le transfert d'un message de la première mémoire tampon de départ (20, 30), respectivement de la deuxième mémoire tampon de départ (21, 31), vers la liaison série bidirectionnelle (2) si la première mémoire tampon d'arrivée (32, 22), respectivement la deuxième mémoire tampon d'arrivée (33, 23) de l'autre machine dispose d'une place suffisante pour recevoir ledit message,
- un deuxième organe d'aiguillage (25, 35) transférant les messages de type requête, respectivement de type réponse, reçus de la liaison série bidirectionnelle (2), vers la première mémoire tampon d'arrivée (22, 32), respectivement la deuxième mémoire tampon d'arrivée (23, 33).
- un registre (26, 36) dans lequel le deuxième organe d'aiguillage (25, 35) accumule des jetons d'un premier type reçus sous forme de messages de l'autre machine par la liaison série bidirectionnelle (2) et duquel le premier organe d'aiguillage (24, 34) retire, à chaque transfert d'un message de la première mémoire tampon de départ (20, 30) vers la liaison série bidirectionnelle (2), une quantité de ces mêmes jetons représentative de la longueur de ce message,
- un registre (27, 37) dans lequel le deuxième organe d'aiguillage (25, 35) accumule des jetons d'un deuxième type reçus sous forme de messages de l'autre machine par la liaison série bidirectionnelle (2) et duquel le premier organe d'aiguillage (24, 34) retire, à chaque transfert d'un message de la deuxième mémoire tampon de départ (21, 31) vers la liaison série bidirectionnelle (2), une quantité de ces mêmes jetons représentative de la longueur de ce message,
- une mémoire tampon (28, 38) dans laquelle sont accumulés, sous forme de messages, une quantité de jetons du premier type représentative de la place rendue disponible par le retrait de messages de la première mémoire tampon d'arrivée (22, 32) et une quantité de jetons du deuxième type représentative de la place rendue disponible par le retrait de messages de la deuxième mémoire tampon d'arrivée (23, 33), les messages accumulés dans la mémoire tampon (28, 38) étant transférés vers la liaison série bidirectionnelle (2) par l'organe d'aiguillage (34).

2. Dispositif d'échange de messages entre deux machines informatiques au moyen d'une liaison série bidirectionnelle (2) suivant la revendication 1, dans lequel une correspondance entre chaque type de jetons et un nombre d'octets à l'intérieur d'un message est programmable avant mise en marche du dispositif.

3. Procédé d'exécution d'au moins une commande générée par une première machine informatique (A), respectivement par une autre machine informatique (B), dans une mémoire de l'autre machine (B), respectivement de la première machine (A), ledit procédé consistant à,
- transformer cette commande en un message de type requête,
- ranger cette requête dans une première mémoire tampon de départ (20) de la première machine (A), respectivement (30) de l'autre machine (B),
- transférer cette requête, au moyen d'une liaison série bidirectionnelle (2), dans une première mémoire tampon d'arrivée (32) de l'autre machine (B), respectivement (22) de la première machine (A),
- retirer cette requête de la mémoire tampon (32), respectivement (22), pour la transformer en un message de type réponse en exécutant ladite commande dans la mémoire de l'autre machine (B), respectivement de la première machine (A),
- ranger cette réponse dans une deuxième mémoire tampon de départ (31) de l'autre machine (B), respectivement (21) de la première machine (A),
- transférer cette réponse, au moyen de la liaison série bidirectionnelle (2), dans une deuxième mémoire tampon d'arrivée (23) de la première machine (A), respectivement (33) de l'autre machine (B),
- retirer cette réponse de la deuxième mémoire tampon d'arrivée (23) de la première machine (A), respectivement (33) de l'autre machine (B), pour acquitter ladite commande,
- le transfert d'une requête dans la première mémoire tampon d'arrivée (32) de l'autre machine (B), respectivement (22) de la première machine (A), étant accompagné d'un retrait de jetons d'un premier type dans un registre (26) de la première machine (A), respectivement (36) de l'autre machine (B), la quantité de jetons retirés étant représentative de la longueur de cette requête,
- le retrait d'une requête de la mémoire tampon (32), respectivement (22), étant accompagné d'un ajout de jetons du premier type dans une mémoire tampon (38) de l'autre machine (B), respectivement (28) de la première machine (A), la quantité de jetons ajoutés étant représentative de la longueur de cette requête,
- les jetons du premier type étant transférés sous forme de messages de la mémoire tampon (38), respectivement (28), vers le registre (26), respectivement (36) au moyen de la liaison série bidirectionnelle (2),
- le transfert d'une réponse dans la deuxième mémoire tampon d'arrivée (23) de la première machine (A), respectivement (33) de l'autre machine (B), étant accompagné d'un retrait de jetons d'un deuxième type dans un registre (37) de l'autre machine (B), respectivement (27) de la première machine (A), la quantité de jetons retirés étant représentative de la longueur de cette réponse,
- le retrait d'une réponse de la deuxième mémoire tampon d'arrivée (23) de la première machine (A), respectivement (33) de l'autre machine (B), étant accompagné d'un ajout de jetons du deuxième type dans la mémoire tampon (28) de la machine (A), respectivement (38) de l'autre machine (B), la quantité de jetons ajoutés étant représentative de la longueur de cette réponse,
- les jetons du deuxième type étant transférés sous forme de messages de la mémoire tampon (28), respectivement (38), vers le registre (37), respectivement (27) au moyen de la liaison série bidirectionnelle (2).

4. Procédé d'exécution d'au moins une commande générée par une première machine informatique (A), respectivement par une autre machine informatique (B), dans une mémoire de l'autre machine (B) respectivement de la première machine (A), suivant la revendication 3, dans lequel à son initialisation, une unité de jetons du premier type est déterminée correspondre à un nombre d'octets à l'intérieur d'un message de type requête et qu'une unité de jetons du deuxième type est déterminée correspondre à un nombre d'octets à l'intérieur d'un message de type réponse.

## Claims

1. Apparatus for the exchange of messages between two information processing machines by means of a bidirectional serial link (2), comprising for each machine,
- a first outgoing buffer memory (20, 30) to contain solely request-type messages to be sent over the bidirectional serial link (2),
- a second outgoing buffer memory (21, 31) to contain solely reply-type messages to be sent over the bidirectional serial link (2),
- a first incoming buffer memory (22, 32) to contain solely request-type messages received from the bidirectional serial link (2),
- a second incoming buffer memory (32, 33) to contain solely reply-type messages received from the bidirectional serial link (2),
- a first routing member (24, 34) permitting the transfer of a message from the first outgoing buffer memory (20, 30), respectively from the second outgoing buffer memory (21, 31), towards the bidirectional serial link (2) if the first incoming buffer memory (32, 22), respectively the second incoming buffer memory (33, 23) of the other machine has sufficient space to receive said message,
- a second routing member (25, 35) transferring request-type messages, respectively reply-type messages, received from the bidirectional serial link (2), towards the first incoming buffer memory (22, 32), respectively the second incoming buffer memory (23, 33),
- a register (26, 36) in which the second routing member (25, 35) accumulates a first type of tokens received in the form of messages from the other machine via the bidirectional serial link (2) and from which the first routing member (24, 34) removes, at each transfer of a message from the first outgoing buffer memory (20, 30) towards the bidirectional serial link (2), a quantity of these same tokens representive of the length of the message,
- a register (27, 37) in which the second routing member (25, 35) accumulates a second type of tokens received in the form of messages from the other machine via the bidirectional serial link (2) and from which the first routing member (24, 34) removes, at each transfer of a message from the second outgoing buffer memory (21, 31) towards the bidirectional serial link (2), a quantity of these same tokens representive of the length of the message,
- a buffer memory (28, 38) in which are accumulated, in the form of messages, a quantity of the first type of tokens representive of the space made available by the removal of messages from the first incoming buffer memory (22, 32) and a quantity of the second type of tokens representive of the space made available by the removal of messages from the second incoming buffer memory (23, 33), the messages accumulated in the buffer memory (28, 38) being transferred via the bidirectional serial link (2) via the routing member (34).

2. Apparatus for the exchange of messages between two information processing machines by means of a bidirectional serial link (2) according to Claim 1, in which a correspondence between each type of tokens and a number of bytes within a message is programmable before the apparatus is started up.

3. Method of execution of at least one command generated by a first information processing machine (A), respectively by another information processing machine (B), in a memory of the other machine (B), respectively the first machine (A), said method consisting in:
- transforming this command into a request-type message,
- storing this request in a first outgoing buffer memory (20) of the first machine (A), respectively (30) of the other machine (B),
- transferring this request, by means of a bidirectional serial link (2), into a first incoming buffer memory (32) of the other machine (B), respectively (22) of the first machine (A),
- removing this request from the buffer memory (32), respectively (22), in order to transform it into a reply-type message by executing said command in the memory of the other machine (B), respectively the first machine (A),
- storing this reply in a second outgoing buffer memory (31) of the other machine (B), respectively (21) of the first machine (A),
- transferring this reply, by means of the bidirectional serial link (2), into a second incoming buffer memory (23) of the first machine (A), respectively (33) of the other machine (B),
- removing this reply from the second incoming buffer memory (23) of the first machine (A), respectively (33) of the other machine (B), in order to acknowledge said command,
- the transfer of a request into the first incoming buffer memory (32) of the other machine (B), respectively (22) of the first machine (A), being accompanied by removal of a first type of tokens from a register (26) of the first machine (A), respectively (36) of the other machine (B), the quantity of tokens removed being representative of the length of this request,
- the removal of a request from the buffer memory (32), respectively (22), being accompanied by an addition of the first type of tokens into a buffer memory (38) of the other machine (B), respectively (28) of the first machine (A), the quantity of tokens added being representative of the length of this request;
- the first type of tokens being transferred in the form of messages from the buffer memory (38), respectively (28), towards the register (26), respectively (36) by means of the bidirectional serial link (2),
- the transfer of a reply into the second incoming buffer memory (23) of the first machine (A), respectively (33) of the other machine (B), being accompanied by the removal of a second type of tokens from a register (37) of the other machine (B), respectively (27) of the first machine (A), the quantity of tokens removed being representative of the length of this reply,
- the removal of a reply from the second incoming buffer memory (23) of the first machine (A), respectively (33) of the other machine (B), being accompanied by an addition of the second type of tokens into the buffer memory (28) of the machine (A), respectively (38) of the other machine (B), the quantity of tokens added being representative of the length of this reply,
- the second type of tokens being transferred in the form of messages from the buffer memory (28), respectively (38), towards the register (37), respectively (27) by means of the bidirectional serial link (2).

4. Method of execution of at least one command generated by a first information processing machine (A), respectively by another information processing machine (B), in a memory of the other machine (B), respectively of the first machine (A), according to Claim 3, in which, on initialisation, a unit of the first type of tokens, is determined to correspond to a number of bytes within a request-type message and that a unit of the second type of tokens is determined to correspond to a number of bytes within a reply-type message.

## Patentansprüche

1. Vorrichtung für den Austausch von Nachrichten zwischen zwei Datenverarbeitungsmaschinen mittels einer bidirektionalen seriellen Verbindung (2), die für jede Maschine umfaßt:
- einen ersten Abgangspufferspeicher (20, 30), der ausschließlich Nachrichten des Anforderungstyps enthält, die auf die bidirektionale serielle Verbindung (2) gesendet werden sollen,
- einen zweiten Abgangspufferspeicher (21, 31), der ausschließlich Nachrichten des Antworttyps enthält, die auf die bidirektionale serielle Verbindung (2) gesendet werden sollen,
- einen ersten Ankunftspufferspeicher (22, 32), der ausschließlich Nachrichten des Anforderungstyps enthält, die von der bidirektionalen seriellen Verbindung (2) empfangen werden,
- einen zweiten Ankunftspufferspeicher (23, 33), der ausschließlich Nachrichten des Antworttyps enthält, die von der bidirektionalen seriellen Verbindung (2) empfangen werden,
- ein erstes Verteilungsorgan (24, 34), das die Übertragung einer Nachricht vom ersten Abgangspufferspeicher (20, 30) bzw. vom zweiten Abgangspufferspeicher (21, 31) an die bidirektionale serielle Verbindung (2) zuläßt, wenn der erste Ankunftspufferspeicher (32, 22) bzw. der zweite Ankunftspufferspeicher (33, 23) der anderen Maschine einen ausreichenden Platz für den Empfang der Nachricht zur Verfügung stellt,
- ein zweites Verteilungsorgan (25, 35), das die Nachrichten des Anforderungstyps bzw. des Antworttyps, die von der bidirektionalen seriellen Verbindung (2) empfangen werden, an den ersten Ankunftspufferspeicher (22, 32) bzw. an den zweiten Ankunftspufferspeicher (23, 33) überträgt,
- ein Register (26, 36), in dem das zweite Verteilungsorgan (25, 35) Tokens eines ersten Typs, die in Form von Nachrichten von der anderen Maschine über die bidirektionale serielle Verbindung (2) empfangen werden, akkumuliert und aus dem das erste Verteilungsorgan (24, 34) bei jeder Übertragung einer Nachricht vom ersten Abgangspufferspeicher (20, 30) an die bidirektionale serielle Verbindung (2) eine Menge dieser Tokens entnimmt, die die Länge dieser Nachricht repräsentiert,
- ein Register (27, 37), in dem das zweite Verteilungsorgan (25, 35) Tokens eines zweiten Typs, die in Form von Nachrichten von der anderen Maschine über die bidirektionale serielle Verbindung (2) empfangen werden, akkumuliert und aus dem das erste Verteilungsorgan (24, 34) bei jeder Übertragung einer Nachricht vom zweiten Abgangspufferspeicher (21, 31) an die bidirektionale serielle Verbindung (2) eine Menge dieser Tokens entnimmt, die die Länge dieser Nachricht repräsentiert,
- einen Pufferspeicher (28, 38), in dem eine Menge von Tokens des ersten Typs, die den Platz, der für die Entnahme von Nachrichten vom ersten Ankunftspufferspeicher (22, 32) verfügbar gemacht worden ist, repräsentiert, und eine Menge von Tokens des zweiten Typs, die den Platz, der für die Entnahme von Nachrichten vom zweiten Ankunftspufferspeicher (23, 33) verfügbar gemacht worden ist, repräsentiert, in Form von Nachrichten akkumuliert sind, wobei die in dem Pufferspeicher (28, 38) akkumulierten Nachrichten durch das Verteilungsorgan (34) an die bidirektionale serielle Verbindung (2) übertragen werden.

2. Vorrichtung für den Austausch von Nachrichten zwischen zwei Datenverarbeitungsmaschinen über eine bidirektionale serielle Verbindung (2) nach Anspruch 1, in der eine Korrespondenz zwischen jedem Token-Typ und einer Anzahl von Bytes innerhalb einer Nachricht vor dem Einschalten der Vorrichtung programmiert werden kann.

3. Verfahren zum Ausführen wenigstens eines Befehls, der von einer ersten Datenverarbeitungsmaschine (A) bzw. von einer anderen Datenverarbeitungsmaschine (B) erzeugt wird, in einem Speicher der anderen Maschine (B) bzw. der ersten Maschine (A), wobei das Verfahren darin besteht,
- diesen Befehl in eine Nachricht des Anforderungstyps zu transformieren,
- diese Anforderung in einem ersten Abgangspufferspeicher (20) der ersten Maschine (A) bzw. (30) der anderen Maschine (B) abzulegen,
- diese Anforderung über eine bidirektionale serielle Verbindung (2) an einen ersten Ankunftspufferspeicher (32) der anderen Maschine (B) bzw. (22) der ersten Maschine (A) zu übertragen,
- diese Anforderung aus dem Pufferspeicher (32) bzw. (22) zu entnehmen, um sie in eine Nachricht des Antworttyps zu transformieren, indem der Befehl im Speicher der anderen Maschine (B) bzw. der ersten Maschine (A) ausgeführt wird,
- diese Antwort in einem zweiten Abgangspufferspeicher (31) der anderen Maschine (B) bzw. (21) der ersten Maschine (A) abzulegen,
- diese Antwort über die bidirektionale serielle Verbindung (2) an einen zweiten Ankunftspufferspeicher (23) der ersten Maschine (A) bzw. (33) der anderen Maschine (B) zu übertragen,
- diese Antwort aus dem zweiten Ankunftspufferspeicher (23) der ersten Maschine (A) bzw. (33) der anderen Maschine (B) zu entnehmen, um den Befehl zu quittieren,
- wobei dann, wenn die Übertragung einer Anforderung an den Ankunftspufferspeicher (32) der anderen Maschine (B) bzw. (22) der ersten Maschine (A) von einer Entnahme von Tokens eines ersten Typs in einem Register (26) der ersten Maschine (A) bzw. (36) der anderen Maschine (B) begleitet wird, die Menge von Tokens, die entnommen werden, die Länge dieser Anforderung repräsentiert,
- wobei dann, wenn die Entnahme einer Anforderung aus dem Pufferspeicher (32) bzw. (22) von einer Hinzufügung von Tokens des ersten Typs in einen Pufferspeicher (38) der anderen Maschine (B) bzw. (28) der ersten Maschine (A) begleitet wird, die Menge der hinzugefügten Tokens die Länge dieser Anforderung repräsentiert,
- wobei die Tokens des ersten Typs in Form von Nachrichten vom Pufferspeicher (38) bzw. (28) an das Register (26) bzw. (36) über die bidirektionale serielle Verbindung (2) übertragen werden,
- wobei dann, wenn die Übertragung einer Antwort an den zweiten Ankunftspufferspeicher (23) der ersten Maschine (A) bzw. (33) der zweiten Maschine (B) von einer Entnahme von Tokens eines zweiten Typs in einem Register (37) der anderen Maschine (B) bzw. (27) der ersten Maschine (A) begleitet wird, die Menge von entnommenen Tokens die Länge dieser Antwort repräsentiert,
- wobei dann, wenn die Entnahme einer Antwort aus dem zweiten Ankunftspufferspeicher (23) der ersten Maschine (A) bzw. (33) der anderen Maschine (B) von einer Hinzufügung von Tokens des zweiten Typs in dem Pufferspeicher (28) der Maschine (A) bzw. (38) der anderen Maschine (B) begleitet wird, die Menge hinzugefügter Tokens die Länge dieser Antwort repräsentiert,
- wobei die Tokens des zweiten Typs in Form von Nachrichten vom Pufferspeicher (28) bzw. (38) an das Register (37) bzw. (27) über die bidirektionale serielle Verbindung (2) übertragen werden.

4. Verfahren zum Ausführen wenigstens eines Befehls, das von einer ersten Datenverarbeitungsmaschine (A) bzw. von einer weiteren Datenverarbeitungsmaschine (B) erzeugt wird, in einem Speicher der anderen Maschine (B) bzw. der ersten Maschine (A) nach Anspruch 3, bei dem bei seiner Initialisierung eine Einheit von Tokens des ersten Typs so bestimmt wird, daß sie einer Anzahl von Bytes innerhalb einer Nachricht des Anforderungstyps entspricht, und eine Einheit von Tokens des zweiten Typs so bestimmt wird, daß sie einer Anzahl von Bytes innerhalb einer Nachricht des Antworttyps entspricht.
